(19) Europäisches Patentamt
European Patent Office
Office européen des brevets

(11) EP 1 796 189 B1

(12) # FASCICULE DE BREVET EUROPEEN

(45) Date de publication et mention de la délivrance du brevet:
**25.03.2009 Bulletin 2009/13**

(51) Int Cl.:
***H01M 4/48*** $^{(2006.01)}$ ***H01M 4/58*** $^{(2006.01)}$
***H01M 4/04*** $^{(2006.01)}$ ***H01M 4/62*** $^{(2006.01)}$

(21) Numéro de dépôt: **07004289.0**

(22) Date de dépôt: **02.05.2000**

(54) **Matériaux d'électrode présentant une conductivité de surface élevée**

Elektrodenmaterialien mit erhöhter Oberflächenleitfähigkeit

Electrode materials having high surface conductivity

(84) Etats contractants désignés:
**DE FR GB IT**

(30) Priorité: **30.04.1999 CA 2270771**

(43) Date de publication de la demande:
**13.06.2007 Bulletin 2007/24**

(62) Numéro(s) de document de la (des) demande(s) initiale(s) en application de l'article 76 CBE:
**00401207.6 / 1 049 182**

(73) Titulaire: **HYDRO-QUEBEC**
**Montréal,**
**Québec H2Z 1A4 (CA)**

(72) Inventeurs:
- **Armand, Michel**
  **38410 Saint-Martin d'Uriage (FR)**
- **Vallee, Alain**
  **Montréal**
  **Québec H2 Z 1A4 (CA)**
- **Ravet, Nathalie**
  **Montréal**
  **Québec H3T1T9 (CA)**
- **Simoneau, Martin**
  **Montréal**
  **Québec H2 Z 1A4 (CA)**
- **Besner, Simon**
  **Couteau du Lac**
  **Québec J0P 1B0 (CA)**
- **Magnan, Jean-François**
  **Neuville**
  **Québec G0A 2R0 (CA)**

(74) Mandataire: **Sueur, Yvette et al**
**Cabinet SUEUR et L'HELGOUALCH,**
**109, boulevard Haussmann**
**75008 Paris (FR)**

(56) Documents cités:
**EP-A- 0 612 117** **US-A- 5 766 796**
**US-A- 5 789 114** **US-A- 5 910 382**

- **PATENT ABSTRACTS OF JAPAN vol. 015, no. 383 (E-1116), 27 septembre 1991 (1991-09-27) & JP 03 152880 A (MATSUSHITA ELECTRIC IND CO LTD), 28 juin 1991 (1991-06-28)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE DE L'INVENTION

La présente invention concerne des matériaux d'électrode capables de réaction rédox par échange d'ions alcalins et d'électrons avec un électrolyte. Les applications sont dans le domaine des générateurs électrochimiques (batteries) primaires ou secondaires, les supercapacités et les systèmes de modulation de la lumière de type électrochrome.

### ART ANTÉRIEUR

On connaît les composés d'insertion (ci-après appelés aussi matériaux électroactifs ou matériaux rédox) dont le fonctionnement est basé sur l'échange d'ions alcalins, en particulier les ions lithium, et des électrons de valence d'au moins un élément de transition de manière à assurer la neutralité dans la matrice solide. Le maintien partiel ou total de l'intégrité structurale du matériau permet la réversibilité de la réaction. Les réactions rédox résultant de la formation de plusieurs phases ne sont habituellement pas réversibles, ou très peu. Il est aussi possible d'effectuer des réactions en phase solide en mettant en jeu la scission réversible de liaisons soufre-soufre ou les réactions rédox intervenant dans la transformation de structures organiques aromatiques en formes quinoniques, en particulier dans les polymères conjugués.

Les matériaux d'insertion sont les ingrédients actifs des réactions électrochimiques utilisés en particulier dans les générateurs électrochimiques, les supercapacités ou les systèmes de modulation de la transmission de la lumière (électrochromes).

La progression de la réaction d'échange ions-électrons requiert l'existence au sein du matériau d'insertion d'une double conductivité, simultanément par les électrons et les ions, en particulier les ions lithium, l'un ou l'autre de ces types de conductivité étant éventuellement trop faible pour assurer des cinétiques d'échanges requises pour l'utilisation du matériau, en particulier pour les générateurs électrochimiques ou les supercapacités. Une solution à ce problème est obtenue partiellement par l'utilisation d'électrodes dites "composites", dans lesquelles le matériau d'électrode est dispersé dans une matrice contenant l'électrolyte et un liant polymère. Dans le cas où l'électrolyte est un électrolyte polymère ou un gel fonctionnant en l'absence de solvant, le rôle de liant mécanique est assuré directement par la macromolécule. Par gel, on entend une matrice polymère, elle-même solvatante ou non, retenant un liquide polaire et un sel, de manière à conférer à l'ensemble les propriétés mécaniques d'un solide tout en retenant au moins une partie de la conductivité du liquide polaire. Un électrolyte liquide et le matériau d'électrode peuvent aussi être maintenus en contact par une faible fraction d'un liant polymère inerte, c'est-à-dire n'interagissant pas avec le solvant. Par l'un quelconque des moyens précités, chaque grain de matériau d'électrode est donc entouré d'électrolyte capable d'amener les ions en contact direct avec la quasi-totalité de la surface du matériau d'électrode. Pour faciliter les échanges électroniques, il est habituel, selon l'art antérieur, d'ajouter des particules d'un matériau conducteur à l'un des mélanges précités du matériau électrode et de l'électrolyte. Ces particules sont à l'état très divisé. Généralement, le choix se porte sur les matériaux carbonés, et tout spécialement sur les noirs de carbone (Shawinigan ou Ketjenblack®). Cependant, les fractions volumiques utilisées sont faibles car ce type de matériau modifie fortement la rhéologie des suspensions, spécialement dans les polymères, avec pour résultat une porosité excessive et une perte d'efficacité du fonctionnement de l'électrode composite, aussi bien en termes de fraction de la capacité utilisable que de la cinétique, i.e., de la puissance disponible. Aux faibles taux utilisés, les grains de carbone se structurent en chaînes, et les points de contact avec le matériau d'électrode proprement dit sont extrêmement réduits. Cette configuration a pour conséquence une mauvaise répartition du potentiel électrique au sein du matériau électroactif. En particulier, des surconcentrations ou des appauvrissements peuvent apparaître aux points de jonction triple:

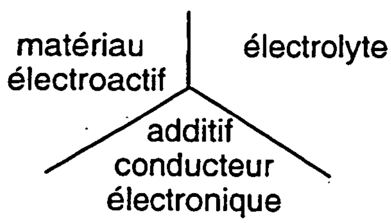


Ces variations excessives de la concentration locale en ions mobiles et les gradients résultant à l'intérieur du matériau électroactif sont très préjudiciables à la réversibilité du fonctionnement de l'électrode sur un nombre élevé de

cycles. Ces contraintes, ou stress, chimiques et mécaniques se traduisent au niveau microscopique par une désintégration des grains de matériau électroactif, dont une partie est susceptible de perdre le contact avec les grains de carbone et de devenir ainsi inactifs électrochimiquement. La structure du matériau peut aussi être détruite, avec l'apparition de nouvelles phases et relargage éventuel des dérivés ou autres fragments de métaux de transition dans l'électrolyte. Ces phénomènes nuisibles apparaissent d'autant plus facilement lorsque la densité de courant ou la puissance demandée à l'électrode est plus grande.

EP-A-0612 117 décrit des batteries qui ont une anode dont la matière active est formée de particules de matériau carboné. Les particules sont obtenues par pyrolyse d'un précurseur de carbone en présence de fines particules de coeur, constituées soit par un composé métallique, soit par un composé d'un tel métal. Lorsque les particules de coeur sont introduites sous forme de particules de composé de métal, ledit composé de métal est décomposé avant que le carbone ne commence à se déposer lors de la pyrolyse du précurseur carboné. Dans les particules ainsi obtenues, la teneur en métal est de préférence de 0,005 à 10 % atomique, la teneur en matériau carboné étant dès lors de 90 à 0,095 % atm. Le but recherché est l'élaboration de particules de carbone contenant la quantité la plus faible possible de matière non électrochimiquement active, le noyau métallique des particules ne servant que lors de l'élaboration.

US-A-5 789 114 décrit un matériau pour une cathode, constitué par des particules d'un oxyde de métal revêtues par une poudre de carbone, en particulier d'un oxyde de manganèse et d'un oxyde de lithium et d'un second élément choisi parmi Mn, Ni, Fe et Co, ou leurs mélanges. Les particules composites sont obtenues par un procédé consistant à mélanger des particules d'oxyde de métal et une poudre de carbone ayant une surface spécifique d'au moins 150 $m^2/g$ et à appliquer une pression au mélange pour couvrir la surface des particules individuelles d'oxyde de métal par la poudre de carbone de sorte qu'au moins 15% de la surface apparente des particules d'oxyde de métal soit couverte. Dans un tel matériau, le contact entre les poudres solides est un contact ponctuel, et l'intégrité structurale n'est pas préservée lors des cycles charge/décharge.

US-A-5,910,382 décrit l'utilisation d'oxydes complexes comme matière active d'électrode. Les oxydes complexes peuvent avoir la structure olivine et la formule $LiMPO_4$ ou la structure Nasicon et la formule $Li_2M_2(PO_4)_3$, M étant un métal de transition de la première rangée. Les oxydes complexes sont obtenus par calcination d'un mélange de précurseurs.

US-A-5,766,796 décrit une batterie dans laquelle la matière active de l'anode est $Li_4Ti_5O_{12}$, l'électrolyte est un électrolyte polymère et la matière active de la cathode est choisie parmi divers oxydes complexes tels que $LiMn_2O_4$, $LiCoO_2$, $LiNiO_2$ ou $LiV_2O_5$. $Li_4Ti_5O_{12}$ est préparé par calcination à 800°C sous atmosphère d'oxygène, d'un mélange de $Li_2CO_3$ et de $TiO_2$.

## DANS LES DESSINS

La Figure 1 illustre la différence entre une électrode classique selon l'art antérieur (A) et une électrode selon l'invention dont les particules de matériau électroactif sont recouvertes d'un revêtement carboné (B).

Les Figures 2 et 3 illustrent une comparaison d'un échantillon de $LiFePO_4$ recouvert de carbone avec un échantillon témoin de $LiFePO_4$ sans carbone. Ces résultats ont été obtenus par voltammétrie cyclique de piles $LiFePO_4$ / $POE_{20}LiTFSI$ / Li cyclées à 20 $mV.h^{-1}$ entre 3 et 3.7 volts à 80°C. Le premier cycle est porté sur la Figure 2 et le cinquième sur la Figure 3.

La Figure 4 illustre l'évolution de la capacité au cours du cyclage des piles réalisées avec l'échantillon de $LiFePO_4$ carboné d'une part et le témoin non carboné d'autre part.

La Figure 5 illustre les performances d'une pile contenant $LiFePO_4$ carboné et cyclée en mode intentiostatique entre 3 et 3.8 Volts à 80°C avec une vitesse de charge et décharge correspondant à C/1.

La Figure 6 illustre l'évolution du courant en fonction du temps d'une pile $LiFePO_4$ / $\gamma$-butyrolactone LiTFSI / Li contenant un échantillon carboné et cyclé à 20 $mV.h^{-1}$ entre 3 et 3.7 volts à température ambiante.

La Figure 7 illustre l'évolution du courant en fonction du temps d'une pile $LiFePO_4$ / $POE_{20}LiTFSI$ / Li contenant un échantillon carboné.

Les Figures 8-9 présentent une comparaison d'échantillons de $LiFePO_4$ recouverts de carbone avec un échantillon témoin de $LiFePO_4$ avant traitement. Ces résultats ont été obtenus par voltammètrie cyclique de piles $LiFePO_4$ / $POE_{20}LiTFSI$ / Li cyclées à 20 $mV.h^{-1}$ entre 3 et 3.7 volts à 80°C. Le premier cycle est illustré sur la Figure 8 et le cinquième sur la Figure 9.

La Figure 10 illustre l'évolution de la capacité au cours du cyclage des piles réalisées avec les échantillons de $LiFePO_4$ carbonés d'une part et le témoin non carboné d'autre part.

SOMMAIRE DE L'INVENTION

La présente invention concerne un matériau d'électrode selon la revendication 1.

Le dépôt de matériau carboné conducteur est déposé à la surface du matériau d'une manière homogène de façon à obtenir une distribution substantiellement régulière du champ électrique à la surface des grains du matériau.

Dans une mise en oeuvre préférentielle, la teneur massique finale en matériau carboné est comprise entre 0.1 et 55%, et plus préférablement entre 0.2 à 15%.

L'invention comprend en outre une cellule électrochimique dans laquelle au moins une électrode est fabriquée à partir d'un matériau d'électrode selon l'invention. La cellule peut opérer comme batterie primaire ou secondaire, super capacité, ou système de modulation de la lumière, la batterie primaire ou secondaire étant le mode d'opération préférentiel.

DESCRIPTION DÉTAILLÉE DE L'INVENTION

La présente invention permet la réalisation de matériaux d'électrode de compositions extrêmement variées dont la caractéristique est d'être revêtus en surface, ou sur la plus grande partie de la surface, d'un revêtement uniforme de matériau carboné conducteur déposé par pyrolyse. La présence dans les matériaux d'électrode de l'invention d'un revêtement uniforme en comparaison du contact ponctuel obtenu avec les poudres de carbone ou d'autres additifs conducteurs de l'art antérieur permet une distribution régulière du champ électrique à la surface des grains du matériau électroactif.

De plus, les gradients de concentration des ions sont diminués considérablement. Cette meilleure distribution de la réaction électrochimique à la surface des particules permet dune part de préserver l'intégrité structurale du matériau, et d'autre part améliore la cinétique, en terme de densité de courant et de puissance disponible à électrode, grâce à la plus grande surface offerte.

Par matériau carboné, on entend un polymère solide contenant majoritairement du carbone, de 60 à 100% molaire, et possédant une conductivité électronique supérieure à $10^{-5}$ $Scm^{-1}$ à température ambiante, de préférence supérieure à $10^{-3}$ $Scm^{-1}$. Les autres éléments présents peuvent être l'hydrogène, l'oxygène, l'azote, en autant qu'ils n'interfèrent pas avec l'inertie chimique propre au carbone pendant les procédés électrochimiques. Le matériau carboné peut être obtenu par décomposition thermique, e.g., oxydation partielle, de divers composés organiques. En général, tout matériau menant, grâce à une réaction ou une séquence de réactions, à un matériau carboné solide ayant les propriétés souhaitables sans affecter la stabilité de l'oxyde complexe, représente un précurseur acceptable. Des précurseurs acceptables comprennent, sans limitation, les hydrocarbures et leurs dérivés, particulièrement les espèces polycycliques aromatiques telles que le goudron ou le brai, le pérylène et ses dérivés, les composés polyhydriques comme les sucres et les hydrates de carbone, leurs dérivés, et les polymères. Des exemples préférentiels de polymères incluent les polyoléfines, les polybutadiènes, l'alcool polyvinylique, les produits de condensation des phénols, y compris ceux obtenus à partir de réaction avec des aldéhydes, les polymères dérivés de l'alcool furfurylique, les polymères dérivés du styrène, du divinylbenzène, du naphtalène, du pérylène, de l'acrylonitrile, et de l'acétate de vinyle; la cellulose, l'amidon et leurs esters et éthers, et leurs mélanges.

L'amélioration de la conductivité à la surface des grains obtenue par le revêtement de matériau carboné selon la présente invention permet le fonctionnement satisfaisant d'électrodes contenant des matériaux électroactifs dont la conductivité électronique est insuffisante pour obtenir des performances acceptables. Les oxydes complexes ayant des couples rédox situés dans des intervalles de voltage utiles et/ou comprenant des éléments peu dispendieux et non toxiques, mais dont la conductivité est trop basse pour des usages pratiques, deviennent utiles comme matériau d'électrode lorsque le revêtement conducteur est présent. Le choix des structures ou mélanges de phases possédant des propriétés rédox mais dont la conductivité électronique est trop faible, est beaucoup plus large que celui des composés de l'art antérieur, de type oxyde mixte de métaux de transition et de lithium. Il est en particulier possible d'inclure dans les structures rédox un ou plusieurs des éléments choisis parmi les non-métaux (métalloïdes) tels que le soufre, le sélénium, le phosphore, l'arsenic, le silicium ou le germanium, dont l'électronégativité plus grande permet de moduler le potentiel rédox des éléments de transition, mais au dépens de la conductivité électronique. Un effet similaire est obtenu par une substitution partielle ou totale des atomes d'oxygène par le fluor ou l'azote.

Le revêtement carboné est déposé par une méthode préférée qui consiste à pyrolyser une matière organique, de préférence riche en carbone, en présence du matériau rédox. Sont particulièrement avantageux les mésomolécules et polymères susceptibles de former facilement, soit mécaniquement, soit par imprégnation à partir d'une solution ou par polymérisation *in situ,* une couche uniforme à la surface des grains du matériau rédox. Une pyrolyse de l'ensemble permet d'obtenir une couche fine et uniforme de matériau carboné à la surface des grains du matériau rédox. Afin que la composition de ce dernier ne soit pas affectée par la réaction de pyrolyse, il est judicieux de choisir des compositions dont la pression d'oxygène libérée par le matériau soit suffisamment faible pour éviter l'oxydation du carbone formé par la pyrolyse. L'activité de l'oxygène de l'oxyde complexe peut être contrôlée par la teneur en métal alcalin, qui elle-même

détermine l'état d'oxydation du ou des éléments de transition contenus dans le matériau et fait partie intégrale de l'invention. Sont particulièrement intéressants les compositions dans lesquelles le coefficient "x" de la teneur en métal alcalin permet de maintenir l'états d'oxydation $Ti^{2+}$ ou $Ti^{3+}$. D'une manière générale, des pressions d'oxygène de l'ordre $10^{-20}$ bars à 0°C et de $10^{-10}$ bars à 900°C sont suffisamment faibles pour permettre le dépôt de carbone par pyrolyse, la cinétique de formation de carbone en présence de résidu hydrocarbonés dus à la pyrolyse étant plus rapide et moins fortement activée que la formation d'oxygène à partir du matériau rédox. Il est aussi possible et avantageux de choisir des matériaux dont la pression d'oxygène en équilibre avec le matériau soit inférieure à celle de l'équilibre

$$C + O_2 \leqq \geqq C0_2$$

Dans ce cas, le matériau carboné peut être thermodynamiquement stable vis-à-vis de l'oxyde complexe. Les pressions correspondantes sont obtenues par la formule suivante:

$$\ln P(O_2) = \ln P(CO_2) = \frac{94050}{R(273{,}2 \div \theta)}$$

dans laquelle R est la constant des gaz parfaits (1,987 cal.mole$^{-1}$.K$^{-1}$); et θ est la température en °C.

Le tableau suivant donne les valeurs des pressions d'oxygène pour quelques températures:

| 9 (°C) | $P(0_2)$ $P(C0_2)$ = 1 atm | $P(0_2)$ $P(C0_2)$ = $10^{-5}$ atm |
|---|---|---|
| 200 | $3.5 \times 10^{-44}$ | $3.5 \times 10^{-49}$ |
| 300 | $1.4 \times 10^{-36}$ | $1.4 \times 10^{-41}$ |
| 400 | $2.9 \times 10^{-31}$ | $2.9 \times 10^{-36}$ |
| 500 | $2.5 \times 10^{-27}$ | $2.5 \times 10^{-32}$ |
| 600. | $2.9 \times 10^{-24}$ | $2.5 \times 10^{-29}$ |
| 700 | $7.5 \times 10^{-22}$ | $7.5 \times 10^{-27}$ |
| 800 | $7.0 \times 10^{-20}$ | $7.0 \times 10^{-25}$ |
| 900 | $3.0 \times 10^{-18}$ | $3.0 \times 10^{-23}$ |

Il est aussi possible d'effectuer le dépôt carboné par la dismutation de l'oxyde de carbone à des températures inférieures à 800°C selon l'équation:

$$2CO \Rightarrow C + CO_2$$

Cette réaction est exothermique mais lente. Les particules d'oxyde complexe peuvent être mises en contact avec le monoxyde de carbone pur ou dilué par un gaz inerte, à des températures allant de 100 à 750°C, de préférence de 300 à 650°C. Avantageusement, la réaction est conduite en technique de lit fluidisé, de manière à avoir une grande surface d'échange entre la phase gazeuse et la phase solide. Les éléments et cations des métaux de transition présents dans l'oxyde complexe sont des catalyseurs de la réaction de dismutation. Il peut être intéressant d'ajouter des faibles quantités de sels de métaux de transition, préférablement le fer, nickel, cobalt à la surface des grains, ces éléments étant particulièrement actifs comme catalyseur de la réaction de dismutation. On peut aussi faire appel à la décomposition d'hydrocarbures en phase gazeuse, tel que les alcanes, ou de préférence ceux riches en carbone, tels que les alcène, les alcynes ou les hydrocarbures aromatiques.

Dans une variante, le dépôt de matériau carboné peut être effectué simultanément à une variation de la composition en métaux alcalins A. Pour ce faire, un sel d'un acide ou d'un polyacide organique est mélangé avec l'oxyde complexe. Une autre possibilité consiste à partir d'un monomère ou d'un mélange de monomères qui sont polymérisés *in situ.* Par pyrolyse, le composé dépose un film de matériau carboné à la surface et le métal alcalin A est incorporé selon l'équation:

$$A_{a'}M_mZ_zO_oN_nF_f + A_{a-a'}C_cO_oR' \Rightarrow A_aM_mZ_zO_oN_nF_f$$

R' étant un radical organique quelconque, éventuellement faisant partie d'une trame polymère.

Parmi les composés susceptibles de permettre cette réaction, on peut citer d'une manière non limitante les sels d'acide carboxyliques tels que les sels des acides oxalique, malonique, succinique, citrique, polyacrylique, polyméthacrylique, benzoique, phtalique, propiolique, acétylène dicarboxylique, naphtalène di- ou tétracarboxylique, pérylène tétracarboxylique, diphénique.

Il est évident que la pyrolyse d'un matériau organique ne contenant pas d'élément alcalin et l'apport de ce dernier par un sel peuvent être combiné afin d'arriver à la stoechiométrie désirée de l'oxyde complexe.

Il est aussi possible d'obtenir un dépôt de matériau carboné, spécialement à des températures basses ou moyennes, inférieures à 400°C par réduction de liaisons carbone-halogène selon l'équation:

$$CY\text{-}CY + 2e^- \Rightarrow \text{-}C{=}C\text{-} + 2Y^-$$

où Y représente un halogène ou un pseudo-halogène. Par pseudo-halogène, on entend un radical organique ou inorganique susceptible d'exister sous forme d'ion $Y^-$ et de former le composé protoné correspondant HY. Parmi les halogènes et pseudo-halogènes, on peut citer d'une manière non limitante F, Cl, Br, I, CN, SCN, CNO, OH, $N_3$, $RCO_2$, $RSO_3$ où R représente H ou un radical organique. La formation par réduction de liaison CY est préférablement effectuée en présence d'éléments réducteurs, par exemple l'hydrogène, le zinc, le magnésium les ions $Ti^{3+}$, $Ti^{2+}$, $Sm^{2+}$, $Cr^{2+}$, $V^{2+}$, les tétrakis(dialkylamino éthylène) ou les phosphines. Ces réactifs peuvent éventuellement être obtenus ou régénérés par voie électrochimique. Par ailleurs, il peut être avantageux d'utiliser des catalyseurs augmentant la cinétique de réduction. Sont particulièrement efficaces les dérivés du palladium ou du nickel, en particulier sous forme de complexes avec les phosphines ou les composés azotés tel la 2,2'-bipyridine. D'une manière similaire, ces composés peuvent être générés sous forme active par voie chimique en présence de réducteurs, en particulier ceux précités, ou par voie électrochimique. Parmi les composés susceptibles de générer du carbone par réduction, on peut citer les perhalocarbones, en particulier sous forme de polymères, l'hexachlorobutadiène, l'hexachlorocyclopentadiène.

Un autre moyen de libérer du carbone par un procédé à basse température consiste en l'élimination du composé hydrogéné HY, Y étant tel que défini ci-haut, selon l'équation :

$$\text{-}CH\text{-}CY\text{-} + B \Rightarrow \text{-}C{=}C\text{-} + BHY$$

Parmi les composés susceptibles de générer du carbone par réduction, on peut citer les composés organiques comportant un nombre équivalent d'atomes d'hydrogène et de groupements Y, tels les hydrohalocarbones, en particulier sous forme de polymères, tel que le polyfluorure, polychlorure ou polybromure ou polyacétate de vinylidène, les hydrates de carbones. La déshydro(pseudo)halogénation peut être obtenue à basse température, incluant la température ambiante, par l'action d'une base susceptible de réagir avec le composé HY pour former un sel. À ce titre, on peut citer les bases tertiaires, amines, amidines, guanidines, imidazoles, les bases inorganiques telles que les hydroxydes alcalins, les composés organométalliques se comportant comme des bases fortes telles que $A(N(Si(CH_3)_3)_2$, $LiN[CH(CH_3)_2]_2$ ou le butyl lithium.

Dans les deux dernières méthodes précitées, il peut être avantageux de recuire les matériaux après le dépôt de carbone. Ce traitement permet une amélioration de la structure ou de la cristallinité du carbone. Le traitement peut être effectué à une température variant entre 100 à 1000°C, de préférence entre 100 à 700°C, ce qui permet d'éviter une éventuelle réduction de l'oxyde complexe par le matériau carboné.

D'une manière générale, il est possible d'obtenir des revêtements de matériau carboné uniformes, assurant une conductivité électronique suffisante, c'est-à-dire au moins du même ordre que la conductivité ionique dans le grain d'oxyde. Les revêtements épais permettent d'obtenir une conductivité suffisante pour que le mélange binaire des grains d'oxyde complexe enrobés de matériau carboné avec l'électrolyte, liquide ou polymère ou le liant inerte macromoléculaire destiné à être imbibé d'électrolyte, soit conducteur par simple contact entre les particules. En général, ce comportement peut s'observer à des fractions volumiques comprises entre 10 et 70%.

Il peut être aussi avantageux de choisir des dépôts de matériau carboné suffisamment fin pour ne pas faire obstacle au passage des ions, tout en assurant la répartition du potentiel électrochimique à la surface du grain. Dans ce cas, les mélanges binaires ne possèdent éventuellement pas une conductivité électronique suffisante pour assurer les échanges électroniques avec le support de l'électrode (collecteur de courant). L'ajout d'un tiers composant conducteur électronique, sous forme de poudre fine ou de fibres, permet d'obtenir une conductivité macroscopique satisfaisante et améliore les échanges électroniques avec le support de l'électrode. Les noirs de carbone ou les fibres de carbone sont particulièrement avantageux pour cette fonction, et donnent des résultats satisfaisants à des taux volumiques n'affectant peu ou pas la rhéologie lors de la mise en oeuvre de l'électrode du fait de l'existence d'une conductivité électronique à la surface des grains du matériau d'électrode. Des fractions volumiques de 0.5 à 10% sont particulièrement préférées.

Les noirs de carbone de type noir de Shawinigan® ou Ketjenblack® sont préférés. Parmi les fibres de carbone, celles obtenues par pyrolyse de polymères tels que le brai, le goudron, le polyacrylonitrile ainsi que celles obtenues par "cracking" d'hydrocarbures sont préférées.

Il est intéressant, du fait de sa légèreté et de sa malléabilité, d'utiliser l'aluminium comme constituant des collecteurs de courant. Ce métal est néanmoins recouvert d'une couche isolante d'oxyde. Cette couche, qui protège le métal de la corrosion, peut dans certaines conditions augmenter d'épaisseur, ce qui amène une résistance accrue de l'interface, préjudiciable au bon fonctionnement de la cellule électrochimique. Ce phénomène peut être particulièrement gênant et rapide dans le cas où la conductivité électronique serait uniquement assurée, comme dans l'art antérieur, par des grains de carbone ayant un nombre de points de contacts limités. L'utilisation, en conjonction avec l'aluminium, des matériaux d'électrode recouverts d'une couche de matériau carboné conducteur permet d'augmenter la surface d'échange aluminium-électrode. Les effets d'une corrosion de l'aluminium sont ainsi annulés ou à tout le moins significativement minimisés. Il est possible d'utiliser soit des collecteurs d'aluminium sous forme de feuillards ou éventuellement sous forme de métal déployé ou expansé, ce qui permet un gain de poids. Du fait de propriétés des matériaux de l'invention, même dans le cas d'un métal déployé, les échanges électroniques au niveau du collecteur se font sans surcroît notable de la résistance.

Lorsque les collecteurs de courant sont thermiquement stables, il est aussi possible d'effectuer la pyrolyse directement sur le collecteur, de manière à obtenir après dépôt de carbone, un film continu poreux qui peut être infiltré par un liquide conducteur ionique, ou bien par un monomère ou mélange de monomères dont la polymérisation *in situ* génère un électrolyte polymère. La formation de films poreux dans lesquels le revêtement carboné forme une trame sont aisément obtenus dans le cadre de l'invention par pyrolyse d'un composite polymère-oxyde complexe déposé à l'état de film sur un support métallique.

Lors de la mise en oeuvre du matériau d'électrode de la présente invention dans une cellule électrochimique, préférablement de type batterie primaire ou secondaire, l'électrolyte est un préférablement un polymère, solvatant ou non, optionnellement plastifié ou gélifié par un liquide polaire contenant en solution un ou plusieurs sels métalliques, et préférablement au moins un sel de lithium. Dans un tel cas, le polymère est préférablement formé à partir d'unités oxyéthylène, oxypropylène, acrylonitrile, fluorure de vinylidène, des esters de l'acide acrylique ou métacrylique, les esters de l'acide itaconique avec des groupements alkyles ou oxaalkyles. L'électrolyte peut également être un liquide polaire immobilisé dans un séparateur microporeux tels qu'une polyoléfine, un polyester, des nanoparticules de silice, d'alumine ou d'aluminate de lithium $LiAlO_2$. Des exemples de liquides polaires comprennent les carbonates cycliques ou linéaires, les formiate d'alkyle, les $\alpha$ - $\omega$ alkylethers, oligoéthylène glycols, la N-méthylpyrrolidinone, la $\gamma$-butyrolactone, les tétraalakylsulfamides, et leurs mélanges.

Les exemples suivants sont fournis afin d'illustrer certaines mises en oeuvre préférentielles de l'invention, et ne doivent pas être considérés comme en limitant la portée.

Exemple 1

Cet exemple illustre la synthèse d'un matériau de l'invention conduisant directement à un matériau d'insertion recouvert d'un dépôt de carbone.

Le matériau $LiFePO_4$ recouvert d'un dépôt carboné a été synthétisé à partir de vivianite $Fe_3(PO_4)_2 \cdot 8H_2O$ et d'orthophosphate de lithium $Li_3PO_4$ en proportions stoechiométriques selon la réaction:

$$Fe_3(PO_4)_2 \cdot 8H_2O + Li_3PO_4 \Rightarrow 3\ LiFePO_4$$

Une poudre de polypropylène a été ajoutée dans une proportion représentant 3 % du poids de la vivianite. Les quantités pesées de chacun des composants ainsi que la poudre de polypropylène ont été intimement broyées ensemble dans un broyeur à billes de zircone. Le mélange a ensuite été chauffé sous atmosphère inerte d'argon, dans un premier temps à 350°C pendant 3 heures pour déshydrater la vivianite, puis la température a été élevée graduellement jusqu'à 700°C pour cristalliser le matériau et carboniser le polypropylène. La température a été maintenue à 700°C pendant 7 heures. La structure du matériau obtenue a été vérifiée par RX et correspond à celle publiée pour la triphyllite. Le pourcentage de carbone présent dans l'échantillon a été déterminé par analyse élémentaire. À la précision de la mesure, la teneur en carbone est de 0.56 % dans l'exemple présenté. Pour comparaison, un échantillon a été préparé dans les mêmes conditions en omettant la poudre de polypropylène. Cet échantillon présente également une structure cristalline pure de type $LiFePO_4$

Propriétés électrochimiques

Les matériaux préparés ont été testés dans des piles boutons du type CR 2032 à température ambiante et à 80°C.

Test à 80°C

Les cathodes ont été préparées en mélangeant ensemble la poudre du matériau actif avec du noir de carbone (Ketjenblack®) pour assurer l'échange électronique avec le collecteur de courant et du polyoxyde d'éthylène de masse 400 000 utilisé comme agent liant d'une part et conducteur ionique d'autre part. Les proportions en poids sont 35:9:56. De l'acétonitrile est ajouté au mélange pour dissoudre le polyoxyde d'éthylène. Le mélange homogénéisé est ensuite coulé sur un disque d'acier inoxydable de 1.7 $cm^2$. La cathode est séchée sous vide puis transférée en boîte à gants Vacuum Atmosphères, sous atmosphère d'hélium (< 1vpm $H_2O$, $O_2$). Une feuille de lithium (27 $\mu$m) laminée sur un substrat de nickel a été utilisée comme anode. L'électrolyte polymère était composé de polyoxyde d'éthylène de masse 5000000 et de LiTFSI (sel de lithium de la bistrifluorométhanesulfonimide) dans les proportions oxygène des unités oxyéthylène / lithium de 20:1.

Les expériences électrochimiques ont été menées à 80°C, température à laquelle la conductivité ionique de l'électrolyte est suffisante, (2 x $10^{-3}$ $Scm^{-1}$). Les études électrochimiques ont été réalisées par voltammétrie lente (20 $mV.h^{-1}$) contrôlée par un cycleur de batterie de type Macpile®. Les batteries ont été chargées et déchargées entre 3.7 et 3 Volts.

La Figure 2 présente le premier cycle obtenu pour les matériaux carbonés et non carbonés dont la synthèse est décrite précédemment. Pour l'échantillon non carboné les phénomènes d'oxydation et de réduction s'étendent sur une large plage de potentiel. Pour l'échantillon carboné, les pics sont mieux définis. L'évolution des 2 matériaux au cours des 5 premiers cycles et très différente (Figure 3). Pour l'échantillon recouvert d'un dépôt de carbone, les cinétiques d'oxydation et de réduction sont de plus en plus rapides, ce qui se traduit par des pics de mieux en mieux définis (courants de pics plus élevés et pics plus étroits). En revanche, pour l'échantillon non carboné, les cinétiques apparaissent de plus en plus lente. L'évolution de la capacité de ces deux échantillons est présentée sur la Figure 4. Dans le cas de l'échantillon carboné, la capacité échangée est stable. Elle représente de 94 à 100% de la capacité théorique (170 $mAh.g^{-1}$) suivant les essais. La capacité initiale du matériau non carboné se situe aux alentours de 145 $mAh.g^{-1}$ soit 85 % de la capacité théorique. Pour cet échantillon, la capacité échangée décroît rapidement. Après 5 cycles la batterie a perdu 20% de sa capacité initiale.

L'échantillon carboné a été cyclé en mode intentiostatique entre 3.8 et 3 V avec des régimes de charge et de décharge rapide. Les courants imposés correspondent à un régime en C/1, ce qui signifie que toute la capacité est échangée en 1 heure. Ces résultats de cyclages sont présentés à la Figure 5. Les 5 premiers cycles ont été réalisés en mode voltampérométrique pour activer la cathode et déterminer sa capacité. Dans ce cas, 100% de la capacité théorique a été échangée durant les premiers cycles voltammétriques et 96% durant les 80 premiers cycles intentiostatiques. Par la suite la capacité décroît lentement et après 1000 cycles, 70% de la capacité (120 $mAh.g^{-1}$) est encore échangée à ce régime. Le cyclage en mode potentiodynamique réalisé après 950 cycles montre qu'en fait, 89% de la capacité initiale est encore disponible à des régimes de décharges plus lents. Cette perte de puissance est associée à l'augmentation de la résistance d'interface lithium/électrolyte polymère. L'allure erratique du paramètre C/D (capacité passée en charge)/(capacité passée en décharge) en fin de cyclage laisse en effet présumer de la formation de dendrites. Ce paramètre est tracé sur la Figure 5.

Test à température ambiante (électrolyte liquide)

Le matériau $LiFePO_4$ recouvert d'un dépôt de carbone a également été testé à température ambiante. Dans ce cas, la cathode composite est préparée en mélangeant le matériau actif avec du noir de carbone et de l'EPDM (préalablement dissout dans du cyclohexane) dans les proportions 85:5:10. Le mélange est étendu sur un collecteur de courant en acier inox en forme de disque de 1.7 $cm^2$, séché sous vide et conservé en boîte à gants sous atmosphère d'hélium. Comme précédemment, le lithium est utilisé comme anode. Les deux électrodes sont séparées par une membrane poreuse de type Celgard™ 2400. L'électrolyte utilisé est une solution de LiTFSI 0.8 molale dans la gamma-butyrolactone.

Les voltampérogrames présentés à la Figure 6 ont été réalisés à température ambiante avec une vitesse de balayage de 20 $mV.h^{-1}$ entre 3 et 3.8 volts. Dans cette configuration, les cinétiques d'oxydation et de réduction apparaissent comme étant beaucoup plus lentes qu'à 80°C. De plus, la batterie perd légèrement en puissance au cours du cyclage. En revanche, la totalité de la capacité théorique est accessible (97.5% cycle 1, 99.4% cycle 5). Elle a été échangée sans perte sur la durée de l'expérience (5 cycles). Il n'est pas exclu que la faible puissance de cette batterie puisse provenir d'une mauvaise imprégnation de l'électrode par l'électrolyte, ce dernier ne mouillant pas le polymère utilisé comme agent liant.

Cet exemple illustre donc que l'amélioration du matériau étudié, en raison de la présence du dépôt de carbone à la surface des grains, porte sur la cinétique, la capacité et la cyclabilité. De plus, son rôle est indépendant de celui du carbone ajouté lors de la préparation des cathodes composites.

Exemple 2

Cet exemple illustre la formation d'un dépôt conducteur carboné à partir d'un gaz de type hydrocarbure. La synthèse décrite dans l'exemple 1 pour la préparation du phosphate double de lithium et de fer a été reprise en omettant la poudre de polypropylène et en remplaçant l'atmosphère inerte du traitement thermique par un mélange de 1 % de propène dans l'azote. Lors du traitement thermique, le propène se décompose pour former un dépôt de carbone sur le matériau en cours de synthèse. L'échantillon obtenu contient 2.5% de carbone, déterminé par analyse chimique. Une voltammétrie cyclique réalisée dans les conditions décrites dans l'exemple 1 sur cet échantillon met en évidence un phénomène important d'activation au cours des premiers cycles (voir Figure 7). L'amélioration des cinétiques s'accompagne dans ce cas d'une augmentation de la capacité réversiblement échangée. Telle que mesurée lors de l'étape de décharge, la valeur de capacité initiale de l'échantillon de $LiFePO_4$ préparé représente 77% de la capacité théorique en tenant compte des 2.5 % de carbone électrochimiquement inactif. Après 5 cycles, cette capacité atteint 91.4%. Le phénomène d'activation observé est relié à l'épaisseur de la couche de carbone éventuellement poreux enrobant les grains et pouvant ralentir la diffusion des cations.

Les exemples 3-5 illustrent le traitement de l'oxyde complexe, en l'occurrence le phosphate double de fer et de lithium $LiFePO_4$, préparé indépendamment par voie thermique, de manière à obtenir un revêtement carboné conducteur.

Exemple 3

L'échantillon de tryphilite $LiFePO_4$ tel que synthétisé précédemment a été analysé. Sa composition massique est : Fe 34.6%, Li 4.2%, P 19.2%, soit un écart à la stoechiométrie d'environ 5%. La poudre à traiter a été imprégnée d'une solution aqueuse de sucrose commercial puis séchée. La quantité de solution a été choisie de manière à correspondre à 10 % du poids de sucrose par rapport au poids du matériau à traiter. L'évaporation de l'eau jusqu'à siccité complète a été faite sous agitation pour obtenir une répartition homogène. L'emploi du sucre représente une mise en oeuvre préférentielle, car il fond avant de se carboniser, ce qui permet de bien enrober les grains. Son rendement relativement faible en carbone après pyrolyse est compensé par son prix peu élevé.

Les traitements thermiques ont été réalisés à 700°C sous atmosphère d'argon). La température a été maintenue pendant 3 heures. Une analyse élémentaire montre que ce produit contient 1.3 % en poids de carbone. Le traitement thermique précédemment décrit conduit à une poudre noire présentant une conductivité électronique de surface mesurable par un simple ohm-mètre commercial. Son éléctroactivité, telle que mesurée sur le 1er cycle (Figure 8) et le 5ème cycle (Figure 9) de charge-décharge est de 155.9 $mAhg^{-1}$ et 149.8 $niAhg^{-1}$ respectivement, soit 91.7% et 88.1% de la théorie. Ces valeurs sont à comparer à celles du produit non revêtu du dépôt carboné, dont seulement 64% sont électroactifs lors du premier cycle. Après 5 cycles, cette valeur tombe à 37.0% (voir Figure 10).

Exemple 4

Le phosphate double $LiFePO_4$ de l'exemple 3 a été additionné d'acétate de cellulose comme précurseur du revêtement carbone. Ce polymère est connu pour se décomposer avec de bons rendements de carbonisation, soit de l'ordre de 24 %. Il se décompose entre 200 et 400°C. Au-delà de cette température, le carbone amorphe obtenu se réorganise pour donner une structure de type graphite ce qui est favorable à l'obtention de dépôts de carbone cohérents et très conducteurs. L'acétate de cellulose a été dissout dans de l'acétone dans une proportion correspondant à 5 % du poids de la matière à traiter et séché avant de procéder comme décrit plus haut. La teneur du produit final en carbone est de 1.5%. Le traitement thermique conduit d'une manière similaire à une poudre noire présentant une conductivité électronique de surface. Son éléctroactivité, telle que mesurée sur le 1er cycle (Figure 8) et le 5ème cycle (Figure 9) de charge-décharge est de 152.6 $mAhg^{-1}$ et 150.2 $mAhg^{-1}$ respectivement, soit 89.8% et 88.3 de la théorie. Ces valeurs sont à comparer à celles du produit non revêtu du dépôt carboné, dont seulement 64% sont électroactifs lors du premier cycle. Après 5 cycles, cette valeur tombe à 37.0% (voir Figure 10).

Exemple 5

Le pérylène et ses dérivés sont connus pour donner, après pyrolyse, des carbones de type graphitique du fait de l'existence de cycles condensés dans la molécule de départ. En particulier, l'anhydride de l'acide pérylène-tetracarboxylique se décompose au-delà de 560°C en donnant des revêtements de carbone très couvrants. Cependant, ce produit est présent en solubilité très faible, et leur mélange intime avec l'oxyde complexe, ici aussi $LiFePO_4$ selon l'exemple 3, est difficile à mettre en pratique. Pour résoudre ce problème, a été synthétisé dans une première étape un polymère contenant les groupements pérylène séparés par une chaîne de polyoxyde d'éthylène. Les segments oxyethylène sont choisis suffisamment longs pour agir comme agents de solubilisation des groupements aromatiques dans les

solvants organique habituels. Pour cela, on a fait réagir l'anhydride de l'acide 3,4,9,10-perylènetetracarboxylique commercial (Aldrich) est sur la Jeffamine 600 (Hunstmann, USA) à chaud, en suivant la réaction :

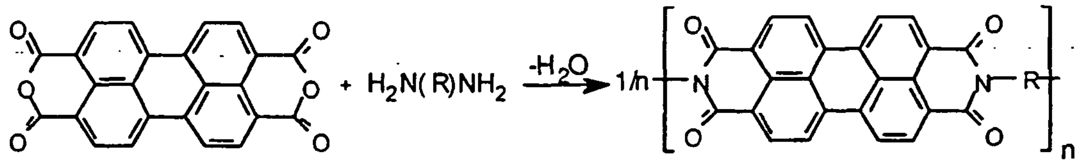


Avec R = $-[CH(CH_3)CH_2O-]_p(CH_2CH_2O-)_q\ [CH_2-CH(CH)_3O]_{p-1}\ CH_2-CH(CH)_3$-$1 \leq p \leq 2$; $10 \leq n \leq 14$
La synthèse a été effectuée en 48 heures dans du diméthylacétamide au reflux (166°C).
Le polymère formé est précipité dans l'eau, puis séparé par filtration. Il est purifié par une dissolution dans l'acétone, filtration, suivi d'une re-précipitation dans l'éther. Ce processus permet d'éliminer les produits de départ non réagi et les faibles masses. La poudre obtenue est finalement séchée. Le rendement de carbonisation de ce produit est de l'ordre de 20 %.

Ce polymère a été dissout dans du dichlorométhane dans une proportion correspondant à 5 % du poids de la matière à traiter avant de procéder comme décrit aux exemples 3 et 4. La teneur du produit final en carbone est de 1%. Le traitement thermique conduit comme précédemment à une poudre noire conductrice. Son éléctroactivité, telle que mesurée sur le 1er cycle (Figure 8) et le 5ème cycle (Figure 9) de charge-décharge est de 148 $mAhg^{-1}$ et 146.9 $mAhg^{-1}$, soit 87.4% et 86.4% de la théorie. Ces valeurs sont à comparer à celles du produit non revêtu du dépôt carboné, dont seulement 64% sont électroactifs lors du premier cycle. Après 5 cycles, cette valeur tombe à 37.9 % (voir Figure 10).

Exemple 6

Cet exemple illustre l'utilisation d'une réaction d'élimination à partir d'un polymère pour former un dépôt carboné selon la présente invention.

Du sulfate de fer (ferrique) $Fe_2(SO_4)_3$ ayant une structure "Nasicon" orthorhombique est obtenu à partir de sulfate de fer (III) hydraté commercial (Aldrich) par déshydratation à 450°C sous vide. En refroidissant et sous agitation, la poudre est suspendue dans de l'hexane et lithiée avec une quantité stoechiométrique de butyl lithium 2M pour donner la composition $Li_{1.5}Fe_2(SO_4)_3$. 20 g de cette poudre blanche sont suspendus dans 100 ml d'acétone et 2.2 g de bromure de poly(vinylidene) $(-CH_2CBr_2)_n$- sont ajoutés et le mélange est traité pendant 12 heures dans un mélangeur à billes comprenant des billes d'alumine. La suspension obtenue est séchée dans un évaporateur rotatif et broyée en une poudre grossière dans un mortier. Le solide est traité avec 3 g de diazabicyclo [5.4.0]unde-7-cène (DBU) dans l'acétonitrile sous reflux pour 3 heures. La poudre noire ainsi obtenue est filtrée pour retirer le bromure d'amine et l'excès de réactif, rincée avec de l'acétonitrile, et séchée sous vide à 60°C. Le dépôt carboné est recuit sous atmosphère d'argon dépourvu d'oxygène (< 1ppm) à 400° pendant 3 heures.

Le matériau recouvert du matériau carboné a été testé pour son activité électrochimique dans une pile au lithium comprenant une électrode de lithium métal, du bis-(trifluorométhanesulfonimide) de lithium 1M dans un mélange 50:50 de carbonate d'éthylène-diméthoxyéthane comme électrolyte immobilisé dans un séparateur de polypropylène microporeux de 25μm. La cathode a été obtenue à partir du matériau rédox préparé avec du noir de carbone (Ketjenblack™) et mis en pâte dans une solution du polymère d'éthylène-propylène-diène, la proportion de solides étant 85:10:5. Le mélange de la cathode est épandu sur un grillage d'aluminium expansé, et pressé à une tonne/$cm^2$ pour donner une épaisseur de 230 μm. Cet assemblage pile bouton est chargé (le matériau testé étant l'anode) à 1 $mAcm^{-2}$ entre des potentiels de 2.8 et 3.9 volts. La capacité du matériau est de 120 $mAgh^{-1}$, correspondant à 89% de la valeur théorique. Le potentiel moyen a été obtenu à 3.6 V vs. $Li^+$:$Li^o$.

Exemple 10

Cet exemple illustre aussi la formation d'un revêtement carboné en variant le contenu de métal alcalin dans les matériaux redox.

De l'acide polyacrylique commercial de poids moléculaire 15 000 a été dissout pour donner une solution 10% dans un mélange eau/méthanol, et titré avec l'hydroxyde de lithium à un pH de 7.4 μL de cette solution ont été séchés dans un creuset à air thermogravimétrique à 80°C pour évaporer l'eau/méthanol. Le chauffage s'est poursuivi à 500°C, donnant un résidu de 0.1895 mg de carbonate de lithium calciné.

18.68 g de phosphate de fer (III) dihydraté commercial (Aldrich), 8.15 g d'oxalate de lithium (Aldrich), 39 mL d'une solution de polyacrylate de lithium, 80 mL d'acétone, et 40 mL de 2,2-diméthoxy acétone capable de piéger l'eau

par réaction chimique, sont mélangés dans un mélangeur à billes comprenant un flacon en polyéthylène à parois épaisses et des billes d'alumine. Après 24 heures, la pâte résultante est filtrée et séchée. La poudre obtenue est traitée sous un courant d'azote sec dépourvu d'oxygène dans un four tubulaire à 700°C pendant trois heures, donnant ainsi une poudre noirâtre. Le produit résultant contient, selon l'analyse élémentaire: Fe: 34%, P: 18.8%, Li: 4.4%, C: 3.2%. Une analyse par rayons X a confirmé l'existence de la triphyllite $LiFePO_4$ pure comme seul composé cristallin. Le matériau d'électrode a été testé pour sa capacité dans une cellule similaire à celle de l'exemple 1 avec un électrolyte d'oxyde de polyéthylène, et ensuite rechargé. Les voltages ont été choisis entre 2.8 et 3.7 volts. La capacité expérimentale durant le premier cycle a été de 135 $mAgh^{-1}$, ce qui correspond à 77% de la valeur théorique, qui augmente à 156 $mAgh^{-1}$ (89%) lorsque la définition du pic s'est améliorée après plusieurs cyclages. 80% de cette capacité est accessible dans le domaine de potentiel 3.3 - 3.6 volts vs. $Li^+$: Li°.

Exemple 14

Les composés de spinelle $Li_{3.5}Mg_{0.5}Ti_4O_{12}$ ont été préparés par la technique sol-gel en utilisant le tétra(isopropoxyde) de titane (28.42 g), l'acétate de lithium dihydraté (35.7. g) et l'acétate de magnésium tétrahydraté (10.7 g) dans 300 mL d'un mélange isopropanol-eau 80:20. Le gel blanc résultant a été séché dans un four à 80°C et calciné à 800°C à l'air pendant 3 heures, ensuite sous argon comprenant 10% d'hydrogène, à 850°C pendant 5 heures. 10 g de la poudre bleue résultante sont mélangés dans 12 mL d'une solution 13% en poids d'acétate de cellulose dans l'acétone. La pâte a été séchée et le polymère carbonisé dans les conditions de l'exemple 4 sous atmosphère inerte à 700°C. ,

L'électrode positive d'une supercapacité électrochimique a été construite de la façon suivante: 5 g de $LiFePO_4$ recouvert de carbone selon l'exemple 3,5 g de Norit® (charbon activé) 4 g de poudre de graphite (diamètre de 2 μm) 3 g de fibres d'aluminium coupées (20 μm de long et 5 mm de diamètre), 9 g de poudre d'anthracène (10 μm) comme agent formateur de pores et 6 g de polyacrylonitrile sont mélangés dans la diméthylformamide dans lequel le polymère se dissout. La pâte a été homogénéisée et enduite sur un feuillard d'aluminium (25 μm) et le solvant évaporé. Le revêtement est ensuite chauffé lentement jusqu'à 380°C sous atmosphère d'azote. L'anthracène s'évapore pour laisser place à une porosité homogène dans le matériau, et l'acrylonitrile se converti grâce à la cyclisation thermique en un polymère conducteur comprenant des cycles pyridine fusionnés. L'épaisseur de la couche résultante est 75 μm.

Un revêtement similaire est réalisé pour une électrode négative avec une pâte dans laquelle $LiFePO_4$ est remplacé par le revêtement de spinelle préparé précédemment: La supercapacité est obtenue en plaçant face à face deux électrodes préparées séparées par un séparateur de polypropylène de 10 μm d'épais trempé dans un mélange 1 M de LiTFSI dans une composition acétonitrile/diméthoxyéthane 50:50. Ce système peut être chargé à 30 $mAcm^{-2}$ et 2.5 V, et produit un pouvoir spécifique de $3kW/L^{-1}$ à 1.8 V.

## Revendications

1. Matériau d'électrode réversible aux ions alcalins et capable de diffuser ces ions, comprenant un oxyde complexe répondant à l'une des formules $Li_{4+x}Ti_5O_{12}$ ou $Li_{4+x-2y}Mg_yTi_5O_{12}$, dans lesquelles $0 \leq x$ et $y \leq 1$

   - l'oxyde complexe comprend un dépôt de matériau carboné conducteur obtenu par pyrolyse d'une matière organique mise en contact avec l'oxyde complexe ou ses précurseurs, ledit revêtement étant différent d'un revêtement par contact ponctuel obtenu avec des poudres de carbone ;
   - ledit matériau carboné conducteur présente une intégrité structurale, lors de la réaction électrochimique subie par le matériau d'électrode.

2. Matériau selon la revendication 1, **caractérisé en ce que** l'oxyde complexe répond à la formule $Li_{3,5}Mg_{0,5}Ti_50_{12}$.

3. Matériau selon la revendication 1, **caractérisé en ce que** le matériau carboné est un polymère solide contenant de 60 à 100% de carbone, les autres éléments présents étant éventuellement H, O ou N, ledit matériau ayant une conductivité supérieure à $10^{-5}$ $S.cm^{-1}$ à température ambiante.

4. Matériau selon l'une des revendications 1 à 3, **caractérisé en ce que** la teneur en matériau carboné est comprise entre 0,1 et 15% en masse.

5. Procédé de préparation d'un matériau selon la revendication 1, **caractérisé en ce qu'**il consiste à mettre en contact l'oxyde complexe avec une matière organique précurseur de matériau carboné, puis à soumettre le précurseur à une pyrolyse.

**6.** Procédé selon la revendication 5, **caractérisé en ce que** la mise en contact est effectuée par imprégnation de l'oxyde complexe par une solution de mésomolécules ou de polymère.

**7.** Procédé selon la revendication 5, **caractérisé en ce que** la mise en contact est effectuée par polymérisation in situ d'une mésomolécule.

**8.** Procédé selon la revendication 5, **caractérisé en ce que** le précurseur est choisi parmi :

- les hydrocarbures et leurs dérivés,
- le pérylène et ses dérivés,
- les composés polyhydriques,
- les polymères,
- la cellulose, l'amidon et leurs esters et éthers, et leurs mélanges.

**9.** Procédé selon la revendication 5, **caractérisé en ce que** la pyrolyse est effectuée sous une pression d'oxygène générée par l'oxyde complexe de $10^{-20}$ bars à 0°C ou de $10^{-10}$ bars à 900°C.

**10.** Procédé selon la revendication 9, **caractérisé en ce que** la pression d'oxygène générée par l'oxyde complexe en équilibre avec le matériau carboné est inférieure à la pression d'oxygène de l'équilibre $C + O_2 \Leftrightarrow CO_2$.

**11.** Procédé selon la revendication 5, **caractérisé en ce que** le précurseur du matériau carboné est CO, et que la pyrolyse est une dismutation de CO à une température inférieure à 800°C, selon l'équation $2\ CO \Rightarrow C + CO_2$.

**12.** Procédé selon la revendication 11, **caractérisé en ce que** CO est mis en contact avec l'oxyde complexe à l'état pur ou dilué par un gaz inerte.

**13.** Procédé selon la revendication 11, **caractérisé en ce qu'**un sel de métal de transition est ajouté à l'oxyde complexe, comme catalyseur de dismutation.

**14.** Procédé selon la revendication 5, **caractérisé en ce que** la pyrolyse est une décomposition thermique d'un précurseur en phase gazeuse, choisi parmi les alcanes, les alcènes, les alcynes et les hydrocarbures aromatiques.

**15.** Procédé selon la revendication 5, **caractérisé en ce que** le précurseur est un sel d'un acide organique ou d'un polyacide organique du cation $A^+$.

**16.** Procédé selon la revendication 15, **caractérisé en ce que** le sel est un sel de $A^+$ d'un acide choisi parmi l'acide oxalique, l'acide malonique, l'acide succinique, l'acide citrique, l'acide polyacrylique, l'acide polyméthacrylique, l'acide benzoïque, l'acide phtalique, l'acide propiolique, l'acide acétylène dicarboxylique, l'acide naphtalène di- ou tétracarboxylique, l'acide pérylène tétracarboxylique, et l'acide diphénique.

**17.** Procédé selon la revendication 5, **caractérisé en ce que** le précurseur du matériau carboné comprend une liaison >CY-CY< dans lequel Y représente un halogène ou un pseudo-halogène, et la pyrolyse est une réaction représentée par l'équation $CY\text{-}CY + 2e^- \Rightarrow -C=C- + 2Y-$, effectuée en présence d'un élément réducteur.

**18.** Procédé selon la revendication 17, **caractérisé en ce que** Y est choisi dans le groupe constitué par F, Cl, Br, I, CN, SCN, CNO, OH, $N_3$, $RCO_2$, $RSO_3$, R représentant H ou un radical organique.

**19.** Procédé selon la revendication 17, **caractérisé en ce que** l'élément réducteur est choisi parmi l'hydrogène, le zinc, le magnésium, les ions $Ti^{3+}$, $Ti^{2+}$, $Sm^{2+}$, $Cr^{2+}$ et $V^{2+}$, les tétrakis(dialkylamino éthylène) et les phosphines.

**20.** Procédé selon la revendication 5, **caractérisé en ce que** le précurseur du matériau carboné est un perhalocarbone.

**21.** Procédé selon la revendication 4, **caractérisé en ce que** le précurseur du matériau carboné comprend une liaison >CH-CY< dans lequel Y représente un halogène ou un pseudo-halogène, et la pyrolyse est une réaction représentée par l'équation $-CH\text{-}CY\text{-} + B \Rightarrow -C=C- + BHY$; B étant une base.

**22.** Procédé selon la revendication 21, **caractérisé en ce que** Y est choisi dans le groupe constitué par F, Cl, Br, I, CN, SCN, CNO, OH, $N_3$, $RCO_2$, $RSO_3$, R représentant H ou un radical organique.

**23.** Procédé selon la revendication 21, **caractérisé en ce que** la base B est une base tertiaire choisie parmi les amines, les amidines, les guanidines et les imidazoles, les bases inorganiques choisies parmi les hydroxydes alcalins, et les composés organométalliques choisis parmi $AN[Si(CH_3)_3]_2$, $LiN[CH(CH_3)_2]_2$ et le butyl lithium.

**24.** Procédé selon la revendication 21, **caractérisé en ce que** le précurseur du matériau carboné est un hydrohalocarbone.

**25.** Procédé selon la revendication 5, **caractérisé en ce qu'**il consiste à partir d'un monomère ou d'un mélange de monomères et de les polymériser in situ.

**26.** Electrode constituée par un matériau selon l'une des revendications 1 à 4 sur un collecteur.

**27.** Electrode selon la revendication 26, **caractérisée en ce que** le collecteur est de l'aluminium.

**28.** Cellule électrochimique comprenant une électrode selon l'une des revendications 26 à 27 comme anode.

**29.** Cellule électrochimique selon la revendication 28, **caractérisé en ce que** l'oxyde complexe de la cathode est $LiFePO_4$.

**30.** Cellule selon l'une des revendications 28 à 29, **caractérisée en ce qu'**un ou deux collecteurs est (sont) constitués par de l'aluminium.

**31.** Cellule selon la revendication 28 fonctionnant comme une batterie primaire ou secondaire, **caractérisée en ce que** l'électrolyte est un polymère, solvatant ou non, optionnellement plastifié ou gélifié par un liquide polaire contenant en solution un ou plusieurs sels métalliques.

**32.** Cellule selon la revendication 28 fonctionnant comme une batterie primaire ou secondaire, **caractérisée en ce que** l'électrolyte est un liquide polaire immobilisé dans un séparateur microporeux.

**33.** Cellule selon la revendication 28 dans laquelle un des sels métalliques est un sel de lithium.

## Claims

**1.** An electrode material reversible to alkali ions and capable of diffusing said ions, comprising a complex oxide corresponding to the one of formulae $Li_{4+x}Ti_5O_{12}$ or $Li_{4+x-2}yMg_yTi_{5}\text{-}_yO_{12}$ wherein:

- 0≤x and y≤1;
- the complex oxide comprises a conductive carbonaceous material deposit obtained by pyrolysis of an organic material brought into contact with the complex oxide or the precursors thereof, said deposit being different from a punctual deposit obtained with carbon powder,
- said conducting carbonaceous material having structural integrity when the electrode material undergoes electrochemical reaction.

**2.** The material according to claim 1, wherein the complex oxide is of formula $Li_{3.5}Mg_{0.5}Ti_5O_{12}$.

**3.** The material according to claim 1, wherein the carbonaceous material is a solid polymer comprising from 60% to 100% of carbon, the other elements optionally present being H, O or N, said material having a conductivity greater than $10^{-5}Scm^{-1}$ at room temperature.

**4.** The material according to one of claims 1 to 3, wherein the carbonaceous material content is between 0,1 and 15% by weight.

**5.** A method for preparing a material according to claim 1, **characterized in that** it consist in contacting the complex oxide with an organic precursor of a carbonaceous material, and submitting the precursor to pyrolysis.

**6.** The method according to claim 5, wherein contacting is performed by impregnating the complex oxide with a solution of mesomolecules or of a polymer.

**7.** The method according to claim 5, wherein contacting is performed by polymerizing a mesomolecule in situ.

**8.** The method according to claim 5, wherein the precursor is selected from :

- hydrocarbons and their derivatives,
- perylene and its derivatives;
- polyhydric compounds,
- polymers,
- cellulose, starch and their esters or ethers, and mixtures thereof.

**9.** The method of claim 5, wherein pyrolysis is performed under an oxygen pressure generated by the complex oxide of from $10^{-20}$ bar at 0°C to $10^{-10}$ bars at 900°C.

**10.** The method according to claim 9, wherein the oxygen pressure generated by the complex oxide in equilibrium with the carbonaceous material is lower than the oxygen pressure of the equilibrium $C + O_2 \Leftrightarrow CO_2$.

**11.** The method according to claim 5, wherein the precursor of the carbonaceous material is CO, and the pyrolysis is a disproportionation of CO at a temperature lower than 800°C, according to the equation $2\ CO \Rightarrow C + CO_2$.

**12.** The method according to claim 11, wherein the complex oxide is contacted with CO in a pure state or in admixture with an inert gas

**13.** The method according to claim 11, wherein a salt of a transition metal is added as a disproportionation catalyst to the complex oxide.

**14.** The method according to claim 5, wherein the pyrolysis is a thermal decomposition of a gaseous precursor, selected from alkanes, alkenes, alkynes and aromatic hydrocarbons.

**15.** The method according to claim 5, wherein the precursor is a salt of an organic acid or polyacid of the cation $A^+$.

**16.** The method according to claim 15, wherein the salt is a salt of $A^+$ of an acid selected from oxalic acid, malonic acid, succinic acid, citric acid, polyacrylic acid, polymethacrylic acid, benzoic acid, phtalic acid, propiolic acid, acetylene dicarboxylic acid, perylene tetracarboxilic acid and diphenic acid.

**17.** The method according to claim 5, wherein the precursor of the carbonaceous material comprises a >CY-CY< bond wherein Y represents a halogen or a pseudo-halogen, and the pyrolysis is a reaction represented by the equation CY-CY + 2e- $\Rightarrow$ -C=C- + 2Y-, carried on in the presence of a reducing element.

**18.** The method according to claim 17, wherein Y is selected from F, Cl, Br, I, CN, SCN, CNO, OH, $N_3$, $RCO_2$, $RSO_3$, R representing H or an organic radical.

**19.** The method according to claim 17, wherein the reducing element is selected from hydrogen, zinc, magnesium, $Ti^{3+}$, $Ti^{2+}$, $Sm^{2+}$, $Cr^{2+}$, and $V^{2+}$, tetrakis(dialkylamino ethylene) or phosphines.

**20.** The method according to claim 5, wherein the precursor of the carbonaceous material is a perhalocarbon.

**21.** The method according to claim 5, wherein the precursor of the carbonaceous material comprises a >CH-CY< bond wherein Y represents a halogen or a pseudo-halogen, and the pyrolysis is a reaction represented by the equation -CH-CY- + B $\Rightarrow$ -C=C- + BHY, B being a base.

**22.** The method according to claim 21, wherein Y is selected from F, Cl, Br, I, CN, SCN, CNO, OH, $N_3$, $RCO_2$, $RSO_3$, R representing H or an organic radical.

**23.** The method according to claim 21, wherein the bas B is a tertiary base selected from amines, amidines, guanidines, imidazoles, inorganic bases selected from alkali hydroxydes, and organometallic compounds selected from $AN[Si(CH_3)_3]_2$, $LiN[CH(CH_3)_2]_2$ or butyl lithium.

**24.** The method according to claim 21, wherein the precursor of the carbonaceous material is a hydrocarbon.

**25.** The method according to claim 5, **characterized in that** it starts from a monomer or a mixture of monomers which are polymerized in situ.

**26.** An electrode consisting of a material according to any of claims 1 to 4 on a collector.

**27.** An electrode according to claim 26, **characterized in that** the collector is made of aluminium.

**28.** An electrochemical cell, which comprises an electrode according to any of claims 26 to 27.

**29.** An electrochemical cell according to claim 28, wherein the complex oxide of the cathode is $LiFePO_4$.

**30.** An electrochemical cell according to any of claims 28 or 29, wherein one collector is or two collectors are made of aluminium.

**31.** An electrochemical cell according to claim 28, working as a primary or secondary battery, wherein the electrolyte is a solvating or non solvating polymer, possibly plastified or gelled by a polar liquid, wherein one or more metal salts are dissolved.

**32.** An electrochemical cell according to claim 28, working as a primary or secondary battery, wherein the electrolyte is a polar liquid immobilized in a microporous separator.

**33.** An electrochemical cell according to claim 28 wherein one of the metal salts is a lithium salt.

## Patentansprüche

**1.** In Bezug auf Alkaliionen reversibles Elektrodenmaterial, das in der Lage ist, diese Ionen zu verbreiten, umfassend ein Komplexoxid einer der Formeln $Li_{4+x}Ti_5O_{12}$ und $Li_{4+x-2y}Mg_yTi_5O_{12}$, worin gilt: $0 \leq x$ und $y \leq 1$, wobei:

- das Komplexoxid eine Ablagerung aus einem leitfähigen, kohlenstoffhaltigen Material umfasst, das durch Pyrolyse eines organischen Materials erhalten wird, das mit dem Komplexoxid oder Vorläufern davon in Kontakt gebracht wird, wobei sich die Beschichtung von einer durch Punktkontakt mit Kohlenstoffpulvern erhaltenen Beschichtung unterscheidet;
- das leitfähige, kohlenstoffhaltige Material bei der elektrochemischen Reaktion des Elektrodenmaterials Strukturintegrität bewahrt.

**2.** Material nach Anspruch 1, **dadurch gekennzeichnet, dass** das Komplexoxid der Formel $Li_{3,5}Mg_{0,5}$ $Ti_5O_{12}$ entspricht.

**3.** Material nach Anspruch 1, **dadurch gekennzeichnet, dass** das kohlenstoffhaltige Material ein festes Polymer ist, das 60 bis 100 % Kohlenstoff enthält, wobei die anderen enthaltenen Elemente gegebenenfalls H, O oder N sind, wobei das Material bei Raumtemperatur eine Leitfähigkeit von mehr als $10^{-5}$ $S \cdot cm^{-1}$ aufweist.

**4.** Material nach einem der Ansprüche 1 bis 3, **dadurch gekennzeichnet, dass** der Gehalt an kohlenstoffhaltigem Material zwischen 0,1 und 15 Gew.-% liegt.

**5.** Verfahren zur Herstellung eines Materials nach Anspruch 1, **dadurch gekennzeichnet, dass** das Verfahren darin besteht, das Komplexoxid mit einem organischen Vorläufermaterial des kohlenstoffhaltigen Materials in Kontakt zu bringen und danach den Vorläufer einer Pyrolyse zu unterziehen.

**6.** Verfahren nach Anspruch 5, **dadurch gekennzeichnet, dass** das In-Kontakt-Bringen durch Imprägnieren des Komplexoxids mit einer Mesomolekül- oder Polymerlösung erfolgt.

**7.** Verfahren nach Anspruch 5, **dadurch gekennzeichnet, dass** das In-Kontakt-Bringen durch In-situ-Polymerisation eines Mesomoleküls erfolgt.

**8.** Verfahren nach Anspruch 5, **dadurch gekennzeichnet, dass** der Vorläufer aus Folgendem ausgewählt ist:

- Kohlenwasserstoffen und Derivaten davon,
- Perylen und Derivaten davon,
- Verbindungen mit mehreren Hydroxylgruppen,
- Polymeren,
- Cellulose, Stärke und Estern und Ethern davon, sowie Gemischen davon.

**9.** Verfahren nach Anspruch 5, **dadurch gekennzeichnet, dass** die Pyrolyse unter einem vom Komplexoxid erzeugten Sauerstoffdruck von $10^{-20}$ bar bei 0 °C oder $10^{-10}$ bar bei 900 °C erfolgt.

**10.** Verfahren nach Anspruch 9, **dadurch gekennzeichnet, dass** der vom Komplexoxid im Gleichgewicht mit dem kohlenstoffhaltigen Material erzeugte Sauerstoffdruck geringer ist als der Sauerstoffdruck des Gleichgewichts $C + O_2 \Leftrightarrow CO_2$.

**11.** Verfahren nach Anspruch 5, **dadurch gekennzeichnet, dass** der Vorläufer des kohlenstoffhaltigen Materials CO ist und dass die Pyrolyse eine Disproportionierung von CO bei einer Temperatur unter 800 °C gemäß der Gleichung $2\ CO \Rightarrow C + CO_2$ ist.

**12.** Verfahren nach Anspruch 11, **dadurch gekennzeichnet, dass** CO mit dem Komplexoxid in unverdünntem oder in mit einem Inertgas verdünntem Zustand in Kontakt gebracht wird.

**13.** Verfahren nach Anspruch 11, **dadurch gekennzeichnet, dass** zum Komplexoxid ein Übergangsmetallsalz als Disproportionierungskatalysator zugesetzt wird.

**14.** Verfahren nach Anspruch 5, **dadurch gekennzeichnet, dass** die Pyrolyse eine thermische Zersetzung eines aus Alkanen, Alkenen, Alkinen und aromatischen Kohlenwasserstoffen ausgewählten Vorläufers in der Gasphase ist.

**15.** Verfahren nach Anspruch 5, **dadurch gekennzeichnet, dass** der Vorläufer ein Salz einer organischen Säure oder einer organischen Polysäure mit dem Kation $A^+$ ist.

**16.** Verfahren nach Anspruch 15, **dadurch gekennzeichnet, dass** das Salz ein Salz von $A^+$ und einer Säure ist, die aus Oxalsäure, Malonsäure, Bernsteinsäure, Citronensäure, Polyacrylsäure, Polymethacrylsäure, Benzoesäure, Phthalsäure, Propiolsäure, Acetylendicarbonsäure, Naphthalindi- oder -tetracarbonsäure, Perylentetracarbonsäure und Diphensäure ausgewählt ist.

**17.** Verfahren nach Anspruch 5, **dadurch gekennzeichnet, dass** der Vorläufer des kohlenstoffhaltigen Materials eine >CY-CY<-Bindung umfasst, worin Y für ein Halogen oder Pseudohalogen steht, und die Pyrolyse eine durch die Gleichung $CY\text{-}CY + 2e^- \Rightarrow \text{-}C{=}C\text{-} + 2Y^-$ dargestellte Reaktion ist, die in Gegenwart eines Reduktionsmittels durchgeführt wird.

**18.** Verfahren nach Anspruch 17, **dadurch gekennzeichnet, dass** Y aus der aus F, Cl, Br, I, CN, SCN, CNO, OH, $N_3$, $RCO_2$, $RSO_3$ bestehenden Gruppe ausgewählt ist, wobei R für H oder einen organischen Rest steht.

**19.** Verfahren nach Anspruch 17, **dadurch gekennzeichnet, dass** das Reduktionsmittel aus Wasserstoff, Zink, Magnesium, den Ionen $Ti^{3+}$, $Ti^{2+}$, $Sm^{2+}$, $Cr^{2+}$ und $V^{2+}$, Tetrakis(dialkylaminoethylen) und Phosphinen bestehenden Gruppe ausgewählt ist.

**20.** Verfahren nach Anspruch 5, **dadurch gekennzeichnet, dass** der Vorläufer des kohlenstoffhaltiges Material ein perhalogenierter Kohlenwasserstoff ist.

**21.** Verfahren nach Anspruch 5, **dadurch gekennzeichnet, dass** der Vorläufer des kohlenstoffhaltigen Materials eine >CH-CY<-Bindung umfasst, worin Y für ein Halogen oder Pseudohalogen steht, und die Pyrolyse eine durch die Gleichung $CH\text{-}CY + B \Rightarrow \text{-}C{=}C\text{-} + BHY$ dargestellte Reaktion ist, wobei B eine Base ist.

**22.** Verfahren nach Anspruch 21, **dadurch gekennzeichnet, dass** Y aus der aus F, Cl, Br, I, CN, SCN, CNO, OH, $N_3$, $RCO_2$, $RSO_3$ bestehenden Gruppe ausgewählt ist, wobei R für H oder einen organischen Rest steht.

**23.** Verfahren nach Anspruch 21, **dadurch gekennzeichnet, dass** die Base B eine aus Aminen, Amidinen, Guanidinen und Imidazolen ausgewählte tertiäre Base, eine aus Alkalimetallhydroxiden ausgewählte anorganische Base oder

eine aus $AN[Si(CH_3)_3]_2$, $LiN[CH(CH_3)_2]_2$ und Butyllithium ausgewählte organometallische Verbindung ist.

**24.** Verfahren nach Anspruch 21, **dadurch gekennzeichnet, dass** der Vorläufer des kohlenstoffhaltigen Materials ein halogenierter Kohlenwasserstoff ist.

**25.** Verfahren nach Anspruch 5, **dadurch gekennzeichnet, dass** es darin besteht, von einem Monomer oder einem Monomergemisch auszugehen und dieses in situ zu polymerisieren.

**26.** Elektrode, die aus einem Material nach einem der Ansprüche 1 bis 4 auf einem Kollektor besteht.

**27.** Elektrode nach Anspruch 26, **dadurch gekennzeichnet, dass** der Kollektor aus Aluminium besteht.

**28.** Elektrochemische Zelle, umfassend eine Elektrode nach einem der Ansprüche 26 bis 27 als Anode.

**29.** Elektrochemische Zelle nach Anspruch 28, **dadurch gekennzeichnet, dass** das Komplexoxid der Kathode $LiFePO_4$ ist.

**30.** Zelle nach einem der Ansprüche 28 bis 29, **dadurch gekennzeichnet, dass** ein oder zwei Kollektoren aus Aluminium bestehen.

**31.** Zelle nach Anspruch 28, die als Primär- oder Sekundärbatterie dient, **dadurch gekennzeichnet, dass** der Elektrolyt ein solvatisierendes oder nicht solvatisierendes Polymer ist, das gegebenenfalls mit einer polaren Flüssigkeit plastifiziert oder geliert ist, die ein oder mehrere Metallsalze in Lösung enthält.

**32.** Zelle nach Anspruch 28, das als Primär- oder Sekundärbatterie dient, **dadurch gekennzeichnet, dass** der Elektrolyt eine polare Flüssigkeit ist, die in einem mikroporösen Separator immobilisiert ist.

**33.** Zelle nach Anspruch 28, worin eines der Metallsalze ein Lithiumsalz ist.

FIGURE 1

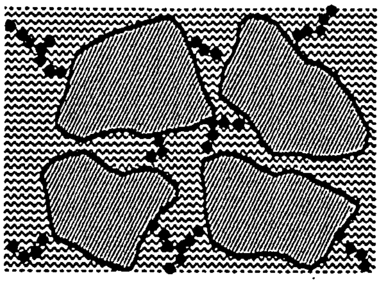

a)

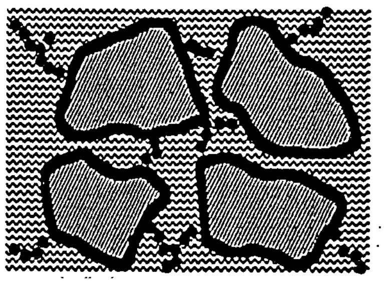

b)

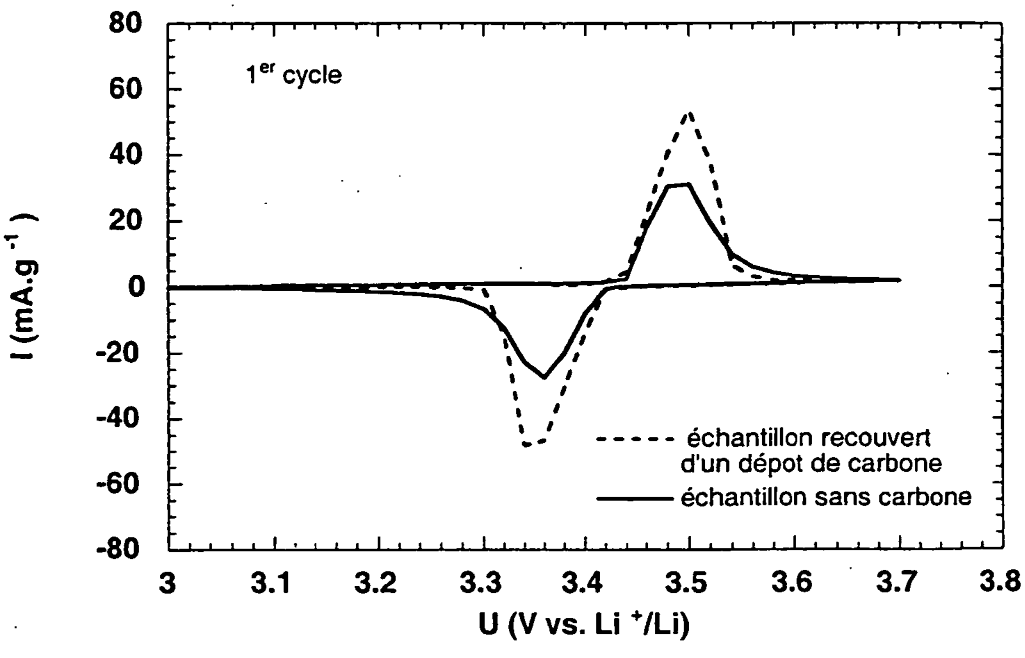


Figure 2

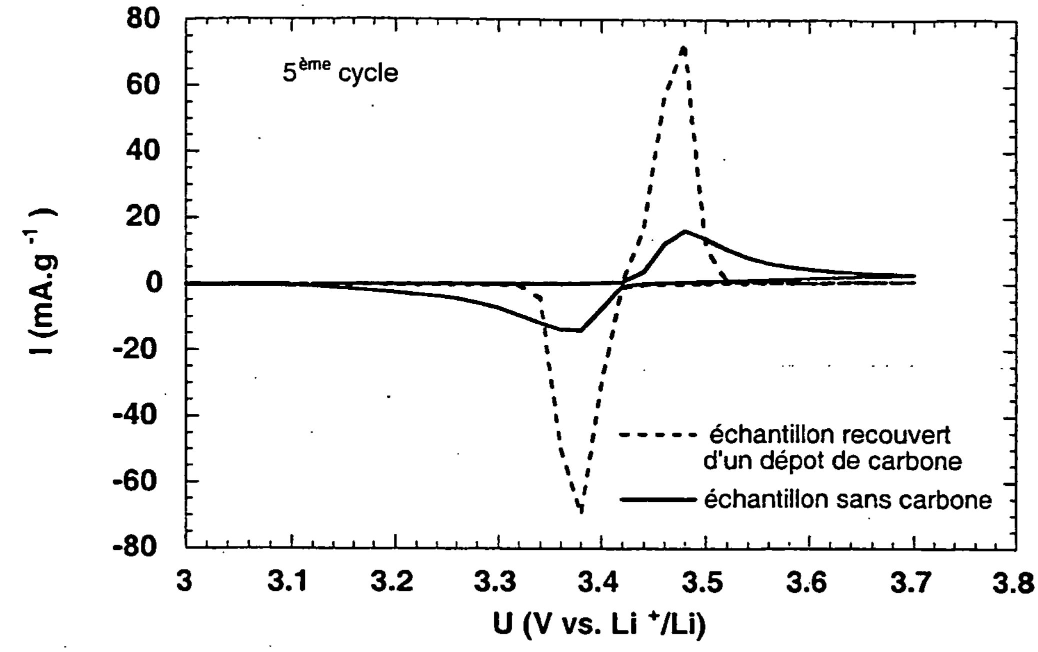


Figure 3

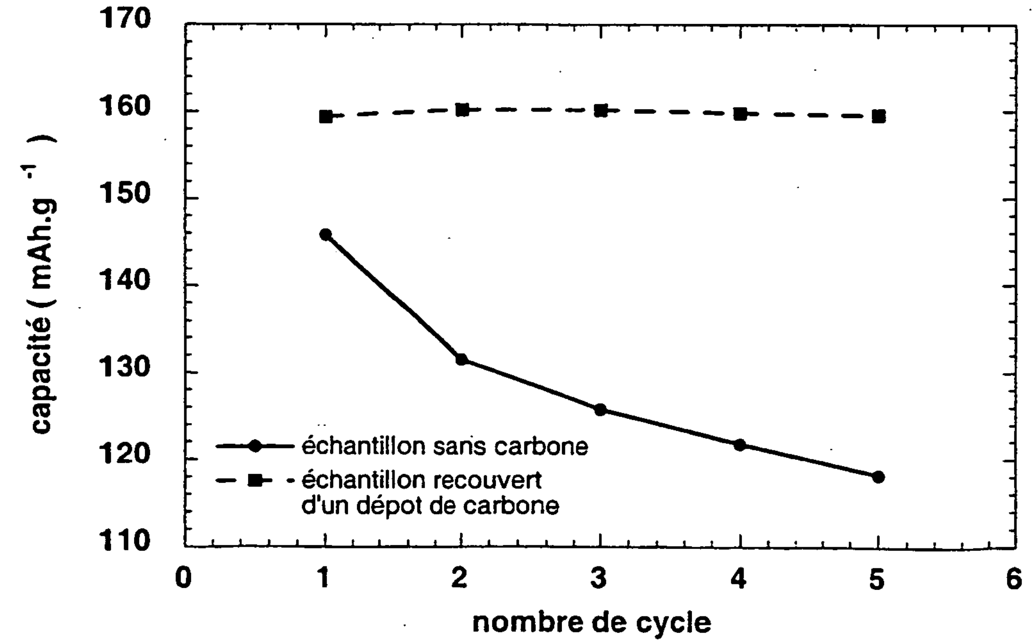


Figure 4

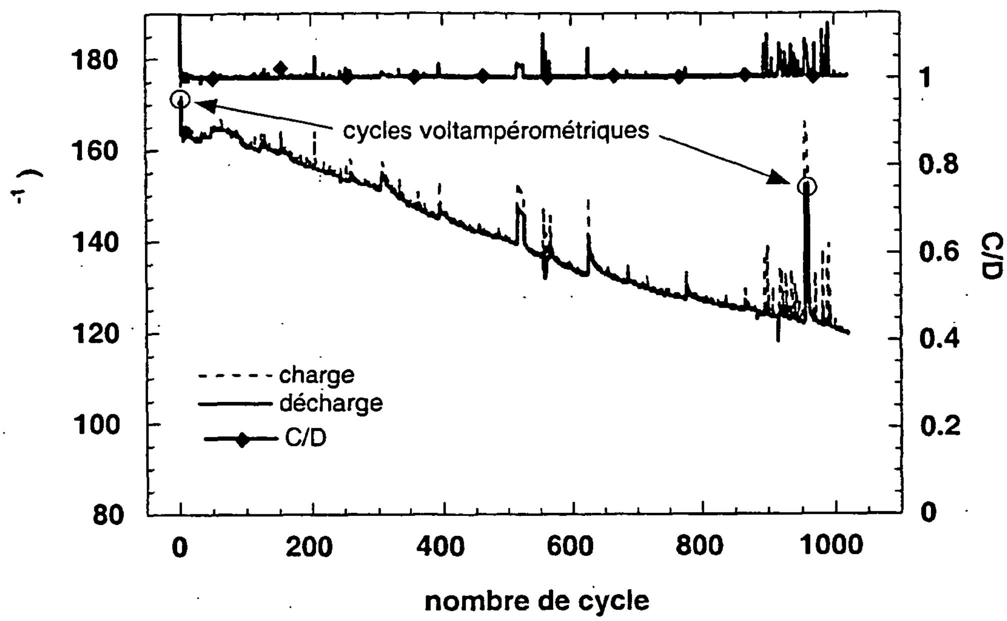
180
160
140
120
100
80
0
200
400
600
800
1000
nombre de cycle
1
0.8
0.6
0.4
0.2
0
C/D
cycles voltampérométriques
charge
décharge
C/D

Figure 5

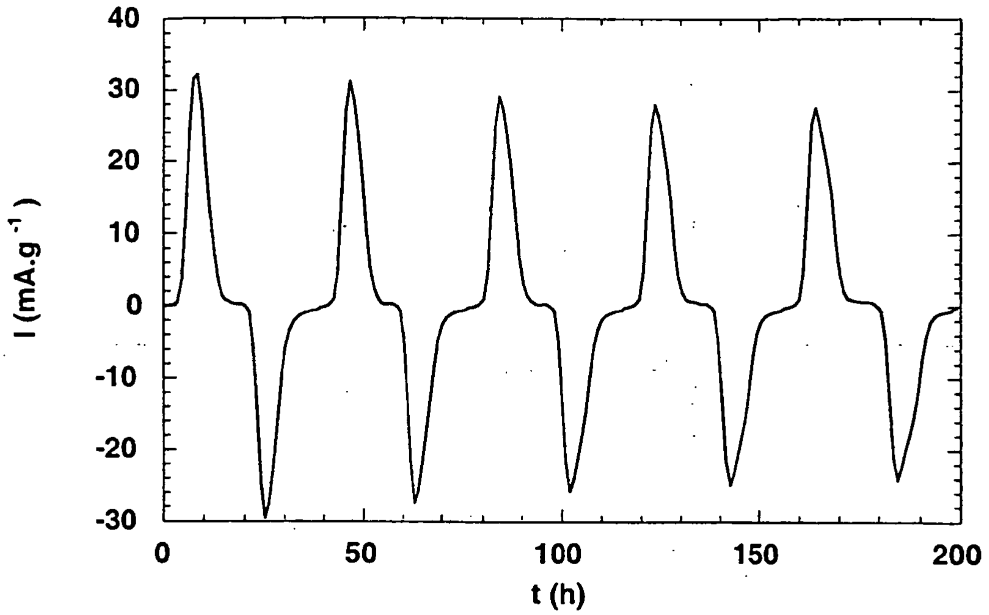


Figure 6

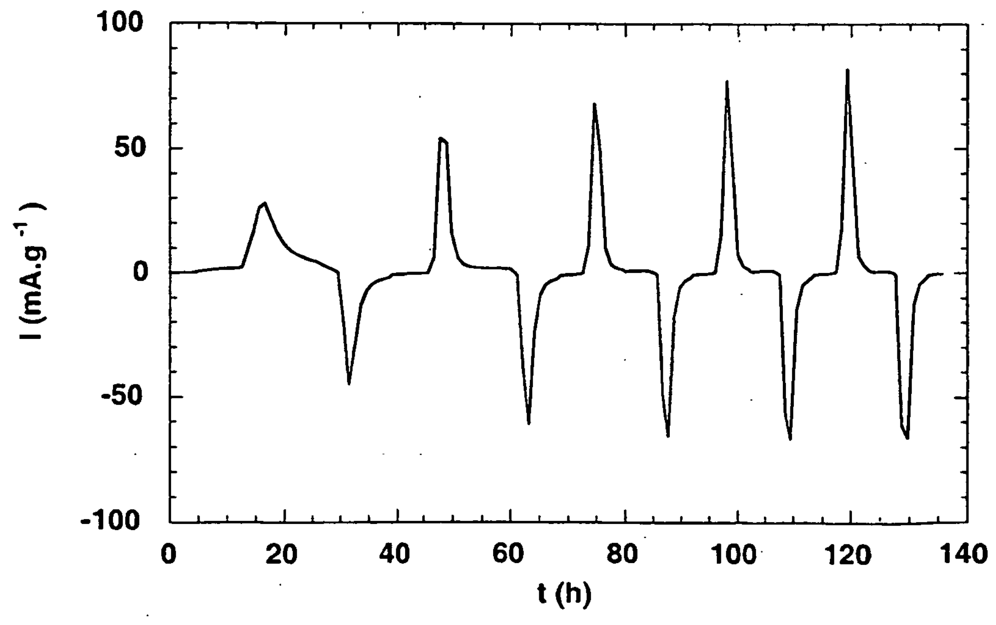


Figure 7

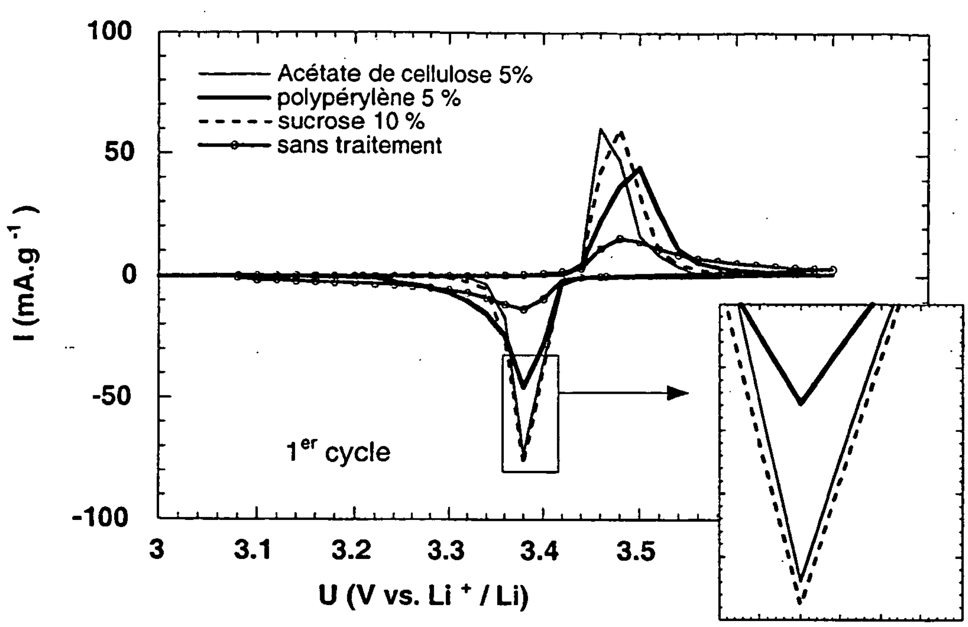


Figure 8

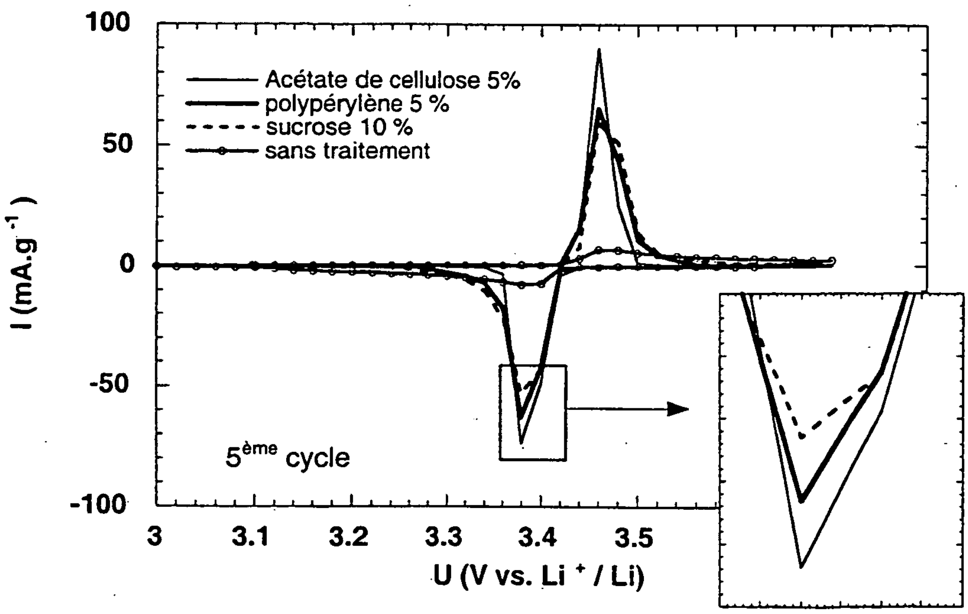


Figure 9

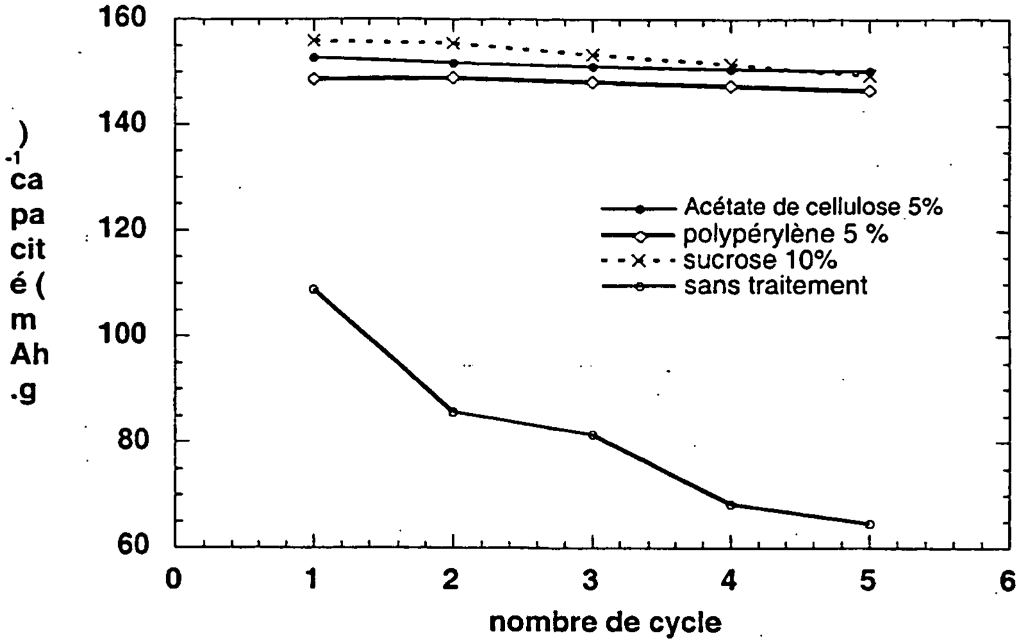
160
140
120
100
80
60
capacité (mAh.g-1)
0
1
2
3
4
5
6
nombre de cycle
Acétate de cellulose 5%
polypérylène 5 %
sucrose 10%
sans traitement

Figure 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0612117 A
- US 5789114 A
- US 5910382 A
- US 5766796 A